# EUROPÄISCHE PATENTSCHRIFT

(11) **EP 4 684 157 B1**
(45) Veröffentlichungstag und Bekanntmachung des Hinweises auf die Patenterteilung: **11.11.2026**
(21) Anmeldenummer: 24711527.2
(22) Anmeldetag: 12.03.2024
(51) Int. Cl.: F17C 13/04

(54) **VENTILBAUGRUPPE FÜR EINEN BRENNGASTANK, BRENNGASTANK MIT VENTILBAUGRUPPE SOWIE BRENNGASTANKSYSTEM**
VALVE ASSEMBLY FOR A FUEL GAS TANK, FUEL GAS TANK COMPRISING A VALVE ASSEMBLY, AND FUEL GAS TANK SYSTEM
ENSEMBLE SOUPAPE POUR UN RÉSERVOIR DE GAZ COMBUSTIBLE, RÉSERVOIR DE GAZ COMBUSTIBLE COMPRENANT UN ENSEMBLE SOUPAPE ET SYSTÈME DE RÉSERVOIR DE GAZ COMBUSTIBLE

(30) Priorität: 21.03.2023 DE 102023202528
(43) Veröffentlichungstag der Anmeldung: 28.01.2026
(73) Patentinhaber: Robert Bosch GmbH, 70442 Stuttgart (DE)
(72) Erfinder: KOENINGER, Andreas, 75245 Neulingen-Goebrichen (DE)
(86) Internationale Anmeldenummer: PCT/EP2024/056529
(87) Internationale Veröffentlichungsnummer: WO 2024/194083

(56) Entgegenhaltungen:
- WO-A1-2011/105038
- DE-C- 687 146
- JP-A- H09 210 296

## Beschreibung

Die Erfindung betrifft eine Ventilbaugruppe für einen Brenngastank. Ferner betrifft die Erfindung einen Brenngastank mit einer erfindungsgemäßen Ventilbaugruppe sowie ein Brenngastanksystem. Bei dem Brenngas kann es sich insbesondere um Wasserstoff oder Erdgas handeln, das in einem Brenngastank unter Druck gespeichert wird.

Das Dokument JP H 09 210296 A zeigt ein Ventil nach dem Stand der Technik.

Bevorzugter Anwendungsbereich der Erfindung sind Brennstoffzellen- und/oder Gasfahrzeuge, die mit Hilfe eines Brenngases angetrieben werden.

### Stand der Technik

Bekannt sind mobile Brenngastanksysteme mit mindestens einem Brenngastank zur Speicherung von Brenngas, beispielsweise Wasserstoff oder Erdgas. Der Brenngastank ist dabei in der Regel als Hochdrucktank ausgelegt. Auf diese Tanks werden üblicherweise Tankventile aufgeschraubt, über welche sowohl die Betankung mit Brenngas als auch die Entnahme von Brenngas gesteuert wird. Innerhalb des Tankventils sind daher zwei Gaspfade ausgebildet, einen Betankungspfad und einen Entnahmepfad. Das Tankventil kann für beide Pfade jeweils einen eigenen Hochdruckanschluss aufweisen oder einen gemeinsamen Hochdruckanschluss. Im letztgenannten Fall werden dann mit Hilfe eines Ventils die beiden Pfade so miteinander verschaltet, dass je nach Schaltzustand der Betankungspfad oder der Entnahmepfad mit dem Hochdruckanschluss verbunden ist.

In den Betankungspfad ist in der Regel ein Rückschlagventil integriert, das verhindern soll, dass während des Abstellens des Systems sowie im Entnahmefall Wasserstoff unkontrolliert aus dem Brenngastank entweichen kann. Das Rückschlagventil ist üblicherweise als mechanisches Rückschlagventil ausgelegt, das ein axialbewegliches Ventilelement sowie eine Schraubendruckfeder aufweist, deren Federkraft auf das Ventilelement in Richtung eines Ventilsitzes wirkt. Das Rückschlagventil öffnet, wenn im Betankungspfad stromaufwärts des Rückschlagventils ein Überdruck gegenüber dem Druck im Brenngastank aufgebaut wird, so dass auf das Ventilelement eine der Federkraft der Schraubendruckfeder entgegengesetzte pneumatische Öffnungskraft wirkt, die zumindest gleich der Federkraft ist.

Bei der Auslegung des Rückschlagventils ist grundsätzlich Folgendes zu beachten:
- Die Zuhaltekraft der Feder muss ausreichend groß sein, um in Schließstellung das Rückschlagventil auch im Entnahmefall sicher geschlossen zu halten, da bei Tankventilen mit nur einem Hochdruckanschluss nicht nur im Entnahmepfad, sondern auch im Betankungspfad Druck aufgebaut wird, so dass das Rückschlagventil ungewollt öffnen kann.
- Der Hub des Ventilelements sollte möglichst groß sein, um in Offenstellung des Rückschlagventils eine optimale Entdrosselung und damit einen hohen Massenstrom sowie kurze Betankungszeiten zu ermöglichen.

Bei geöffnetem Rückschlagventil kann es jedoch durch systemimmanente Druckschwingungen zu einem Axialschwingen des Ventilelements kommen, dem sogenannten "Schnarren". Das Schnarren wiederum führt zu einem erhöhten Führungsverschleiß sowie zu einer unerwünschten Geräuschentwicklung. Um dies zu vermeiden, ist ein Auslegungsziel eine stabile Einstellung eines pneumatischen Kraftüberschusses gegenüber der Zuhaltekraft der Feder.

Dem steht entgegen, dass im Laufe eines Betankungsvorgangs der Gegendruck im Brenngastank kontinuierlich zunimmt und demzufolge der in Öffnungsrichtung wirkende pneumatische Kraftüberschuss abnimmt. Dem steht ferner entgegen, dass bei Verwendung einer Schraubendruckfeder sich die mechanische Schließkraft aufgrund der linearen Kraftkennlinie der Schraubendruckfeder mit zunehmendem Öffnungshub des Ventilelements erhöht.

Hinzu kommt, dass bei einem Brenngastanksystem mit mehreren unterschiedlich großen Brenngastanks, von denen jeder mit einem eigenen Tankventil ausgestattet ist, sich die technisch maximal mögliche Entdrosselung der Betankungspfade nach dem größten Brenngastank richtet, da dieser die längste Befüllzeit benötigt. Wären die Betankungspfade der kleineren Brenngastanks entsprechend maximal entdrosselt, würde dies zu einer schnelleren Befüllung der kleineren Brenngastanks führen. Dies ist nicht gewollt, sondern eine möglichst schnelle und gleichmäßige Befüllung aller Brenngastanks. Hierzu werden in die Betankungspfade der kleineren Brenngastanks - stromaufwärts oder stromabwärts der Rückschlagventile - Drosselelemente integriert.

Unabhängig von der Positionierung eines in einen Betankungspfad integrierten Drosselelements wird hierdurch der Gasmassenstrom im Betankungspfad reduziert. Die Folge ist eine geringere pneumatische Kraft, die in Öffnungsrichtung auf das Ventilelement des Rückschlagventils wirkt. Je nach Federkrafteinstellung kann dann der notwendige Kraftüberschuss fehlen, um das Rückschlagventil vollständig zu öffnen oder geöffnet zu halten bzw. ein axiales Schwingen des Ventilelements zu verhindern.

Bei den kleineren Brenngastanks eines Brenngastanksystems mit unterschiedlich großen Brenngastanks ist zudem eine große Ventilhubauslegung abgeleitet aus den Entdrosselungsanforderungen des Betankungspfads des größten Brenngastanks grundsätzlich nicht erforderlich, da der engste Strömungsquerschnitt durch das Drosselelement vorgegeben ist.

Um Abhilfe zu schaffen, könnte die Tankgröße bei der Auslegung des Rückschlagventils, insbesondere in Bezug auf Sitzdurchmesser, Federkraft und/oder Hub, berücksichtigt werden. Für jede Tankgröße müsste dann allerdings ein anderes Rückschlagventil vorgehalten werden, was aufgrund der Vielzahl an Tankgrößen nicht wirtschaftlich wäre.

Mit Hilfe der vorliegenden Erfindung sollen die vorstehend genannten Nachteile überwunden oder zumindest verringert werden. Insbesondere soll eine wirtschaftliche Lösung zur Optimierung der Auslegung eines in einen Betankungspfad integrierten Rückschlagventils unter Einbeziehung der jeweiligen Tankgröße gefunden werden, um ein unerwünschtes axiales Schwingen des Ventilelements des Rückschlagventils zu verhindern.

Zur Lösung der Aufgabe wird die Ventilbaugruppe mit den Merkmalen des Anspruchs 1 vorgeschlagen. Vorteilhafte Weiterbildungen der Erfindung sind den Unteransprüchen zu entnehmen. Des Weiteren werden ein Brenngastank mit einer erfindungsgemäßen Ventilbaugruppe sowie ein Brenngastanksystem vorgeschlagen.

### Offenbarung der Erfindung

Die für einen Brenngastank vorgeschlagene Ventilbaugruppe umfasst ein Gehäuse, in dem ein Betankungspfad mit integriertem Rückschlagventil ausgebildet ist. Das Rückschlagventil umfasst ein axial bewegliches Ventilelement sowie eine Schließfeder, deren Federkraft auf das Ventilelement in Richtung eines Ventilsitzes wirkt. Erfindungsgemäß ist im Bereich des Rückschlagventils, vorzugsweise im Gehäuse und/oder im Ventilelement, ein Drossel- und Anschlagelement integriert, das einen definierten Drosselquerschnitt zur Einstellung des Gasmassenstroms im Betankungspfad sowie ein definiertes Höhenmaß zur Einstellung des Hubs des Ventilelements aufweist.

Das Drossel- und Anschlagelement stellt ein einfach und kostengünstig zu fertigendes Bauteil dar, so dass mehrere Drossel- und Anschlagelemente mit unterschiedlichen Drosselquerschnitten und/oder Höhenmaßen ein günstiges Baukastensystem ergeben. Aus diesem Baukastensystem kann dann bei der Auslegung des Rückschlagventils das für die jeweilige Tankgröße passende Drossel- und Anschlagelement gewählt werden. Ein Drossel- und Anschlagelement ist insbesondere als "passend" anzusehen, wenn es in jedem Betriebszustand während der Betankung des Brenngastanks einen stabilen Hubanschlag des Ventilelements gewährleistet, so dass dieses nicht axial zu schwingen beginnt.

Dank des Baukastensystems muss nicht mehr eine Vielzahl unterschiedlicher Rückschlagventile vorgehalten werden, sondern es können - mit Ausnahme des Drossel- und Anschlagelements - gleiche Bauteile verwendet werden. Dadurch sinken die Gesamtkosten.

Eine weitere Vereinfachung und Kostensenkung wird dadurch erreicht, dass mit Hilfe des Drossel- und Anschlagelements mehrere Funktionen in einem Bauteil vereint werden, und zwar die Einstellung des Gasmassenstroms im Betankungspfad sowie die Einstellung des Ventilhubs.

Vorteilhafterweise ist das Drossel- und Anschlagelement in Betankungsrichtung stromabwärts des Ventilelements des Rückschlagventils angeordnet. Auf dieser Seite ist in der Regel auch die Schließfeder angeordnet, so dass - abhängig von der konkreten Ausgestaltung des Rückschlagventils das Drossel- und Anschlagelement als Federteller einsetzbar ist. Im Fall einer als Schraubendruckfeder ausgebildeten Schließfeder kann zudem der Raum zwischen den Windungen zur zumindest abschnittsweisen Aufnahme des Drossel- und Anschlagelements genutzt werden, so dass der Bauraumbedarf des Rückschlagventils im Wesentlichen unverändert bleibt.

Bevorzugt wird der definierte Drosselquerschnitt durch mindestens eine Bohrung, Nut und/oder Aussparung des Drossel- und Anschlagelements ausgebildet. Im Fall einer Bohrung wird das Drossel- und Anschlagelement von Brenngas durchströmt (innendurchströmte Ausgestaltung). Im Fall einer Nut und/oder Aussparung wird das Drossel- und Anschlagelement von dem Brenngas umströmt (außenumströmte Ausgestaltung). Zur weiteren Begrenzung des Drosselquerschnitts kann dann das Gehäuse der Ventilbaugruppe herangezogen werden, so dass das Drossel- und Anschlagelement gemeinsam mit dem Gehäuse einen definierten Drosselquerschnitt ausbildet.

Gemäß einer bevorzugten Ausführungsform der Erfindung ist das Drossel- und Anschlagelement in das Gehäuse der Ventilbaugruppe eingesetzt, vorzugweise eingepresst, und weist eine dem Ventilelement zugewandte, als Hubanschlag dienende Stirnfläche auf. Das Drossel- und Anschlagelement bildet somit einen ortsfesten Hubanschlag aus, an dem das Ventilelement während eines Betankungsvorgangs idealerweise verharrt. Über das in das Gehäuse eingesetzte Drossel- und Anschlagelement rückt der Hubanschlag näher an das Ventilelement, so dass über das Höhenmaß des Drossel- und Anschlagelements der Ventilhub einstellbar ist.

Gemäß einer weiteren bevorzugten Ausführungsform der Erfindung ist das Drossel- und Anschlagelement zumindest abschnittsweise in das Ventilelement eingesetzt, vorzugsweise eingepresst, und weist eine dem Ventilelement abgewandte Stirnfläche auf, die mit einem gehäuseseitigen Hubanschlag zusammenwirkt. Der gehäuseseitige Hubanschlag kann beispielsweise durch einen Absatz des Gehäuses ausgebildet werden. Auch in dieser Ausführungsform ist somit der Hubanschlag ortsfest. Das in das Ventilelement integrierte Drossel- und Anschlagelement verkürzt den Abstand zwischen Hubanschlag und Ventilelement, so dass über das Höhenmaß des Drossel- und Anschlagelements der Ventilhub einstellbar ist.

Des Weiteren wird vorgeschlagen, dass das Drossel- und Anschlagelement gestuft ausgeführt ist. Über die Stufe kann in einfacher Weise das Höhenmaß des Drossel- und Anschlagelements vorgegeben werden. Ferner kann ein Verbindungsabschnitt geschaffen werden, der in eine Bohrung des Gehäuses oder des Ventilelements einsetzbar, insbesondere einpressbar, ist. Im letztgenannten Fall weist der Verbindungsabschnitt ein Pressübermaß gegenüber der Bohrung auf. Über die Stufe kann dann zugleich die Einpresstiefe des Ventilelements vorgegeben werden.

Alternativ oder ergänzend kann über die Stufe eine Stützfläche zur Abstützung der Schließfeder ausgebildet werden.

Ferner bevorzugt weist das Drossel- und Anschlagelement mindestens eine außenumfangseitige Abflachung, beispielsweise in Form eines Anschliffs, auf. Diese Ausgestaltung des Drossel- und Anschlagelements ist insbesondere von Vorteil, wenn das Drossel- und Anschlagelement von dem Brenngas umströmt wird (außenumströmte Ausgestaltung), so dass das Brenngas über die außenumfangseitige Abflachung zur Drosselstelle gelangen kann.

In Weiterbildung der Erfindung wird vorgeschlagen, dass das Gehäuse der Ventilbaugruppe einen Verbindungsabschnitt zur Verbindung mit dem Brenngastank sowie einen Anschlussabschnitt zur Verbindung mit mindestens einer Hochdruckanschlussleitung aufweist. Der Verbindungsabschnitt kann insbesondere zylinderförmig gestaltet sein, so dass er einfach in einen Brenngastank, vorzugsweise in einen Flaschenhals eines flaschenförmigen Brenngastanks, einsetzbar ist. Der Anschlussabschnitt des Gehäuses ist vorzugsweise außerhalb des Brenngastanks angeordnet, so dass er einfach mit der mindestens einen Hochdruckanschlussleitung verbunden werden kann.

Da der bevorzugte Anwendungsbereich einer erfindungsgemäßen Ventilbaugruppe Brenngastanks sind, wird ferner ein Brenngastank mit einer erfindungsgemäßen Ventilbaugruppe vorgeschlagen. Das Gehäuse der Ventilbaugruppe ist dabei bevorzugt abschnittsweise in den Brenngastank, vorzugsweise in einen Flaschenhals des Brenngastanks, eingesetzt, insbesondere eingeschraubt.

Darüber hinaus wird ein Brenngastanksystem vorgeschlagen, das mindestens einen Brenngastank mit einer erfindungsgemäßen Ventilbaugruppe als Tankventil umfasst. Vorzugsweise weist das Brenngastanksystem mehrere parallel geschaltete Brenngastanks auf, von denen zumindest ein Brenngastank mit einer erfindungsgemäßen Ventilbaugruppe ausgestattet ist. Über die Anzahl der Brenngastanks kann das Speichervolumen des Brenngastanksystems den jeweiligen Bedürfnissen angepasst werden. Weiterhin vorzugsweise sind die Brenngastanks unterschiedlich groß ausgelegt, um die vorhandenen Bauraumbedingungen optimal auszunutzen. In diesem Fall weist zumindest der kleinste Brenngastank eine erfindungsgemäße Ventilbaugruppe als Tankventil auf.

Bevorzugter Anwendungsbereich eines erfindungsgemäßen Brenngastanksystems sind Brennstoffzellenfahrzeuge und/oder Gasfahrzeuge.

Eine bevorzugte Ausführungsform der Erfindung wird nachfolgend anhand der beigefügten Zeichnungen näher erläutert. Diese zeigen:
Fig. 1 einen schematischen Längsschnitt durch eine erfindungsgemäße Ventilbaugruppe auf einem Brenngastank,
Fig. 2 einen schematischen Längsschnitt durch ein erstes Rückschlagventil für eine erfindungsgemäße Ventilbaugruppe a) in Schließstellung und b) in Offenstellung,
Fig. 3 einen schematischen Längsschnitt durch ein zweites Rückschlagventil für eine erfindungsgemäße Ventilbaugruppe a) in Schließstellung und b) in Offenstellung,
Fig. 4 einen schematischen Längsschnitt durch ein drittes Rückschlagventil für eine erfindungsgemäße Ventilbaugruppe a) in Schließstellung, b) in Offenstellung und c) einen schematischen Querschnitt durch das Rückschlagventil,
Fig. 5 eine schematische Darstellung eines Brenngastanksystems mit unterschiedlich großen Brenngastanks.

### Ausführliche Beschreibung der Zeichnungen

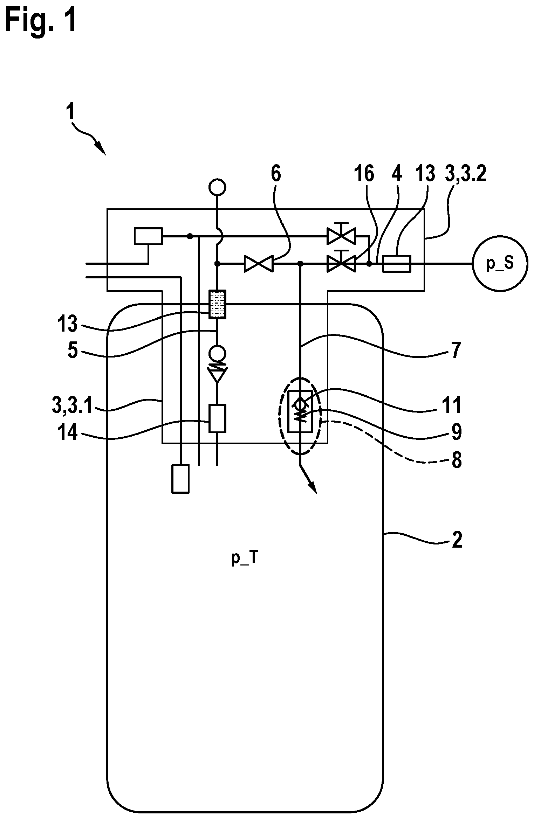

Die in der Figur 1 schematisch dargestellte erfindungsgemäße Ventilbaugruppe 1 weist ein Gehäuse 3 mit einem Verbindungsabschnitt 3.1 und einem Anschlussabschnitt 3.2 auf. Über den Verbindungsabschnitt 3.1 ist die Ventilbaugruppe 1 in einen Brenngastank 2 eingesetzt. Über den Anschlussabschnitt 3.2 ist eine Hochdruckanschlussleitung 15 mit der Ventilbaugruppe 1 verbunden. Die dargestellte Ventilbaugruppe 1 dient der Entnahme von Brenngas aus dem Brenngastank 2 sowie dem Befüllen des Brenngastanks 2 mit Brenngas. Bei dem Brenngas kann es sich insbesondere um Wasserstoff oder Erdgas handeln.

Zur Entnahme von Brennstoff ist im Gehäuse 3 der Ventilbaugruppe 1 ein Entnahmepfad 5 mit integriertem Absperrventil 6 ausgebildet. Die Betankung des Brenngastanks 2 erfolgt über einen Betankungspfad 7 mit integriertem Rückschlagventil 8. Der Entnahmepfad 5 und der Betankungspfad 7 sind abschnittsweise zu einem Brenngaspfad 4 zusammengeführt, an den die Hochdruckanschlussleitung 15 angeschlossen ist.

Neben den bereits genannten Ventilen, ist in den Brenngaspfad 4 ein manuell betätigbares Ventil 16 integriert. Weitere Ventile sind im Entnahmepfad 5 vorgesehen, unter anderem ein Massenstrombegrenzungsventil 14. Im Entnahmepfad 5 ist zwischen dem Massenstrombegrenzungsventil 14 und dem Absperrventil 6 zudem ein Filter 13 angeordnet. Ein weiterer Filter 13 ist in den Brenngaspfad 4 integriert. Darüber hinaus sind weitere Einrichtungen vorgesehen, wobei es sich insbesondere um Sicherheitseinrichtungen und Sensoren handelt.

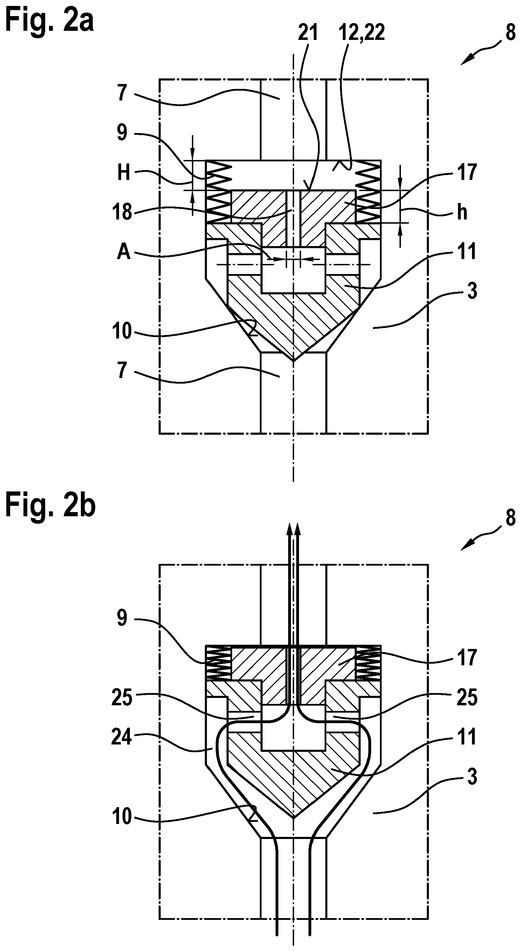

Wesentliches Element einer erfindungsgemäßen Ventilbaugruppe 1 stellt ein Drossel- und Anschlagelement 17 dar, das im Bereich des Rückschlagventils 8 in das Gehäuse 3 oder in das Ventilelement 11 des Rückschlagventils 8 integriert ist. Mögliche Ausführungsformen des Drossel- und Anschlagelements 17 werden nachfolgend anhand der Figuren 2, 3 und 4 beschrieben, die jeweils ein in einem Gehäuse 3 einer Ventilbaugruppe 1 aufgenommenes Rückschlagventil 8 zeigen.

Bei dem Rückschlagventil 8 der Figur 2a), b) bildet das Gehäuse 3 einen Ventilsitz 10 für ein axial bewegliches Ventilelement 11 aus, das in Richtung des Ventilsitzes 10 von der Federkraft einer Schließfeder 9 beaufschlagt ist. Das Drossel- und Anschlagelement 17 ist abschnittsweise in das Ventilelement 11 eingesetzt, insbesondere eingepresst, so dass es sich zusammen mit dem Ventilelement 11 bewegt. Durch seine gestufte Ausgestaltung bildet das Drossel- und Anschlagelement 17 eine umlaufende Fläche bzw. Stufe aus, die beim Einsetzen, insbesondere Einpressen, des Drossel- und Anschlagelements 17 zur Anlage am Ventilelement 11 gelangt, so dass hierüber die Einpresstiefe des Drossel- und Anschlagelements 17 in Bezug auf das Ventilelement 11 vorgebbar ist. Zugleich ist durch die Stufe ein definiertes Höhenmaß h des Drossel- und Anschlagelements 17 vorgegeben, mittels dessen der Hub H des Ventilelements 11 einstellbar ist. Beim vollem Hub H gelangt eine Stirnfläche 21 des Drossel- und Anschlagelements 17 zur Anlage an einem gehäuseseitigen Hubanschlag 12, der vorliegend durch einen Absatz 22 des Gehäuses 3 ausgebildet wird. Über eine im Drossel- und Anschlagelement 17 ausgebildete Bohrung 18 ist zudem ein definierter Drosselquerschnitt A vorgegeben.

In der Figur 2a) ist das Rückschlagventil 8 geschlossen, so dass über den Betankungspfad 7 kein Brenngas aus dem Brenngastank (nicht dargestellt) entweichen kann.

In der Figur 2b) ist das Rückschlagventil 8 vollständig geöffnet, so dass Brenngas über den Ventilsitz 10 in einen Ventilraum 24 und von dort über im Ventilelement 11 ausgebildete Radialbohrungen 25 zur Bohrung 18 des Drossel- und Anschlagelements 17 gelangen kann (siehe Pfeile in der Figur 2b)). Das Drossel- und Anschlagelement 17 wird demnach von dem Brenngas durchströmt (innendurchströmte Ausgestaltung).

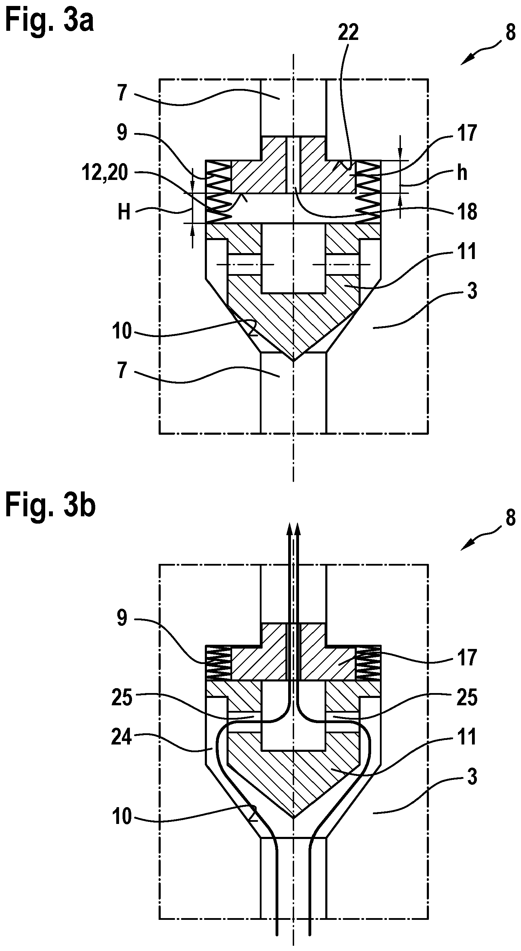

Bei dem Rückschlagventil 8 der Figur 3a), b) ist das Drossel- und Anschlagelement 17 nicht mit dem Ventilelement 11, sondern mit dem Gehäuse 3 verbunden. Im Übrigen ist das Rückschlagventil 8 der Figur 3a), b) gleich dem der Figur 2a), b) aufgebaut.

In der Figur 3a), b) ist das Drossel- und Anschlagelement 17 gestuft ausgeführt und abschnittsweise in eine Bohrung 26 des Gehäuses 3 eingesetzt, insbesondere eingepresst. Die Stufe gibt dabei einerseits die Einpresstiefe, andererseits ein definiertes Höhenmaß h des Drossel- und Anschlagelements 17 vor. Eine dem Ventilelement 11 zugewandte Stirnfläche 20 des Drossel- und Anschlagelements 17 bildet einen Hubanschlag 12 aus, an dem das Ventilelement 11 bei vollem Hub H zur Anlage gelangt.

In der Figur 3a) ist das Rückschlagventil 8 geschlossen, so dass über den Betankungspfad 7 kein Brenngas aus dem Brenngastank (nicht dargestellt) entweichen kann.

In der Figur 3b) ist das Rückschlagventil 8 vollständig geöffnet, so dass Brenngas über den Ventilsitz 10 in einen Ventilraum 24 und von dort über im Ventilelement 11 ausgebildete Radialbohrungen 25 zur Bohrung 18 des Drossel- und Anschlagelements 17 gelangen kann (siehe Pfeile in der Figur 3b)). Das Drossel- und Anschlagelement 17 wird demnach von dem Brenngas durchströmt (innendurchströmte Ausgestaltung).

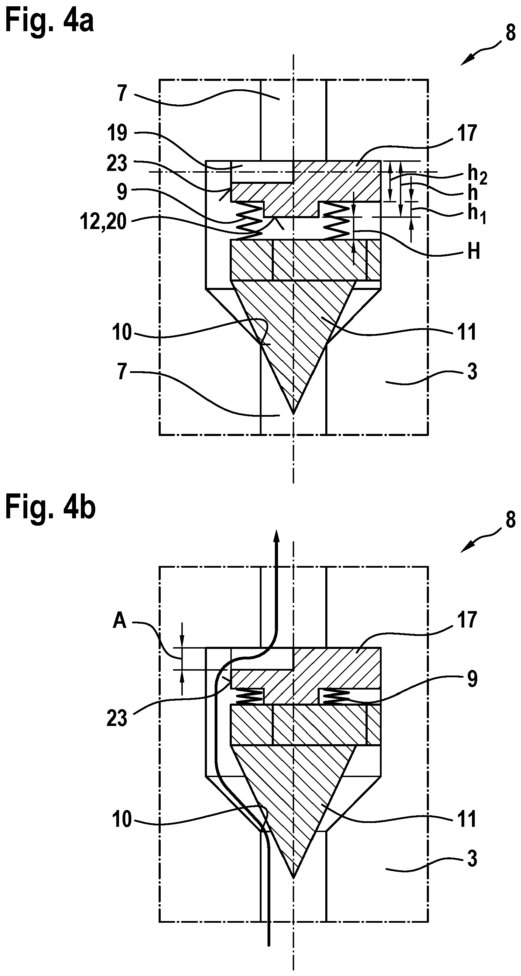

Bei dem Rückschlagventil 8 der Figur 4a), b), c) ist das Drossel- und Anschlagelement 17 derart gestaltet, dass das Brenngas außen am Drossel- und Anschlagelement 17 vorbeigeführt wird (außenumströmte Ausgestaltung). Das Drossel- und Anschlagelement 17 weist hierzu eine stirnseitig angeordnete Aussparung 19 auf, die einseitig durch das Gehäuse 3 begrenzt wird, so dass die Aussparung 19 einen definierten Drosselquerschnitt A aufweist. Das Drossel- und Anschlagelement 17 ist gestuft ausgeführt, so dass eine Stufe ausgebildet wird, an der vorliegend die Schließfeder 9 abgestützt ist. Die Stufe unterteilt das Drossel- und Anschlagelement 17 in zwei Abschnitte, deren Höhen h₁ und h₂ gemeinsam ein definiertes Höhenmaß H ergeben. Eine dem Ventilelement 11 zugewandte Stirnfläche 20 des Drossel- und Anschlagelements 17 dient als Hubanschlag 12, an dem das Ventilelement 11 bei vollem Hub H zur Anlage gelangt (siehe Figur 4b)).

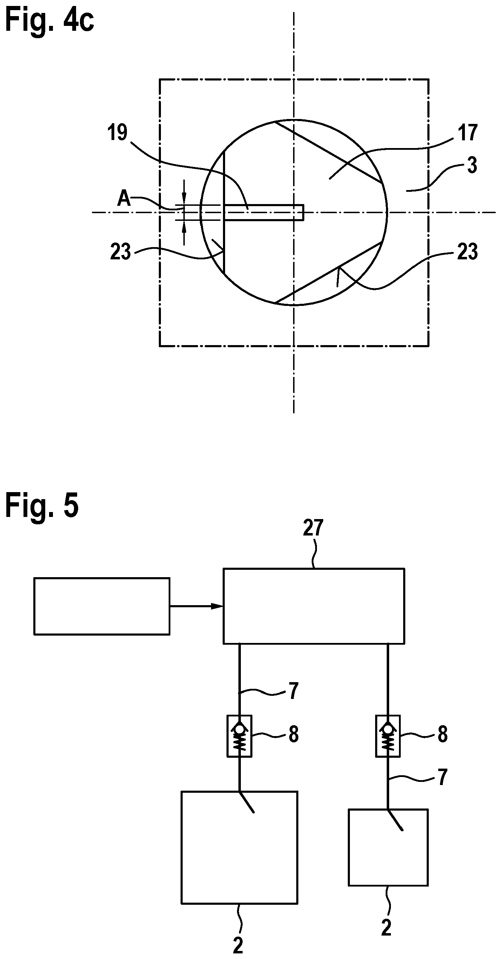

Da das Drossel- und Anschlagelement 17 eine außenumströmte Ausgestaltung aufweist, sind außenumfangseitige Abflachungen 23 zur Ausbildung von Strömungskanälen vorgesehen (siehe Figur 4c)), über die das Brenngas zur Aussparung 19 gelangt. Ähnliche Abflachungen kann das Ventilelement 11 aufweisen.

Nicht dargestellt, aber eine weitere mögliche Ausgestaltung eines Rückschlagventils 8 für eine erfindungsgemäße Ventilbaugruppe 1 kann analog dem Rückschlagventil 8 der Figur 4 ausgebildet und anstelle mit dem Gehäuse 3 mit dem Ventilelement 11 verbunden sein.

Bevorzugter Anwendungsbereich einer erfindungsgemäßen Ventilbaugruppe 1 sind Brenngastanksysteme mit mehreren Brenngastanks 2, die unterschiedlich groß aus gebildet sind. Ein derartiges Brenngastanksystem ist beispielhaft in der Figur 5 dargestellt, wobei auf die komplette Darstellung der mit den Brenngastanks 3 verbundenen Tankventile bzw. Ventilbaugruppen 1 verzichtet wurde. Stattdessen ist jeweils nur der Betankungspfad 7 mit dem hierin integrierten Rückschlagventil 8 dargestellt.

Über die Betankungspfade 7 sind die Brenngastanks 2 mit einem Verteiler 27 zum Befüllen der Brenngastanks 2 mit Brenngas verbunden. Um eine schnelle und gleichmäßige Befüllung der unterschiedlich großen Brenngastanks 2 zu fördern, sollte die jeweilige Tankgröße bei der Auslegung der im Betankungspfad 7 angeordneten Rückschlagventile 8 berücksichtigt werden. Dies kann bei einer erfindungsgemäßen Ventilbaugruppe 1 in einfacher Weise mit Hilfe des Drossel- und Anschlagelements 17 realisiert werden. Das Drossel- und Anschlagelement 17 wird - je nach Tankgröße - aus einem Baukastensystem ausgewählt, das mehrere Drossel- und Anschlagelemente 17 mit unterschiedlichem Drosselquerschnitt A und/oder unterschiedlichem Höhenmaß h umfasst. Die tankindividuelle Auslegung des Rückschlagventils 8 erfordern dann lediglich den Austausch des Drossel- und Anschlagelements 17.

## Patentansprüche

1. Ventilbaugruppe (1) für einen Brenngastank (2), umfassend ein Gehäuse (3), in dem ein Betankungspfad (7) mit integriertem Rückschlagventil (8) ausgebildet ist, wobei das Rückschlagventil (8) ein axial bewegliches Ventilelement (11) sowie eine Schließfeder (9) umfasst, deren Federkraft auf das Ventilelement (11) in Richtung eines Ventilsitzes (10) wirkt,
**dadurch gekennzeichnet, dass** im Bereich des Rückschlagventils (8), vorzugsweise im Gehäuse (3) und/oder im Ventilelement (11), ein Drossel- und Anschlagelement (17) integriert ist, das einen definierten Drosselquerschnitt (A) zur Einstellung des Gasmassenstroms im Betankungspfad (7) sowie ein definiertes Höhenmaß (h) zur Einstellung des Hubs (H) des Ventilelements (11) aufweist.

2. Ventilbaugruppe (1) nach Anspruch 1,
**dadurch gekennzeichnet, dass** das Drossel- und Anschlagelement (17) in Betankungsrichtung stromabwärts des Ventilelements (11) des Rückschlagventils (8) angeordnet ist.

3. Ventilbaugruppe (1) nach Anspruch 1 oder 2,
**dadurch gekennzeichnet, dass** der definierte Drosselquerschnitt (A) durch mindestens eine Bohrung (18), Nut und/oder Aussparung (19) des Drossel- und Anschlagelements (17) ausgebildet wird.

4. Ventilbaugruppe (1) nach einem der vorhergehenden Ansprüche,
**dadurch gekennzeichnet, dass** das Drossel- und Anschlagelement (17) in das Gehäuse (3) der Ventilbaugruppe (1) eingesetzt, vorzugweise eingepresst, ist und eine dem Ventilelement (11) zugewandte, als Hubanschlag (12) dienende Stirnfläche (20) aufweist.

5. Ventilbaugruppe (1) nach einem der vorhergehenden Ansprüche,
**dadurch gekennzeichnet, dass** das Drossel- und Anschlagelement (17) zumindest abschnittsweise in das Ventilelement (11) eingesetzt, vorzugsweise eingepresst, ist und eine dem Ventilelement (11) abgewandte Stirnfläche (21) aufweist, die mit einem gehäuseseitigen Hubanschlag (12) zusammenwirkt.

6. Ventilbaugruppe (1) nach einem der vorhergehenden Ansprüche,
**dadurch gekennzeichnet, dass** das Drossel- und Anschlagelement (17) gestuft ausgeführt ist.

7. Ventilbaugruppe (1) nach einem der vorhergehenden Ansprüche,
**dadurch gekennzeichnet, dass** das Drossel- und Anschlagelement (17) mindestens eine außenumfangseitige Abflachung (23), beispielsweise in Form eines Anschliffs, aufweist.

8. Ventilbaugruppe (1) nach einem der vorhergehenden Ansprüche,
**dadurch gekennzeichnet, dass** das Gehäuse (3) einen Verbindungsabschnitt (3.1) zur Verbindung mit dem Brenngastank (2) sowie einen Anschlussabschnitt (3.2) zur Verbindung mit mindestens einer Hochdruckanschlussleitung (15) aufweist.

9. Brenngastank (2) mit einer Ventilbaugruppe (1) nach einem der vorhergehenden Ansprüche, wobei vorzugsweise das Gehäuse (3) der Ventilbaugruppe (1) abschnittsweise in den Brenngastank (2), vorzugsweise in einen Flaschenhals des Brenngastanks (2), eingesetzt, insbesondere eingeschraubt, ist.

10. Brenngastanksystem, umfassend mindestens einen Brenngastank (2) mit einer Ventilbaugruppe (1) nach einem der Ansprüche 1 bis 8.

## Claims

1. Valve assembly (1) for a fuel gas tank (2), comprising a housing (3), in which a refuelling path (7) with an integrated check valve (8) is formed, wherein the check valve (8) comprises an axially movable valve element (11) and a closing spring (9), the spring force of which acts on the valve element (11) in the direction of a valve seat (10),
**characterized in that**, in the region of the check valve (8), preferably in the housing (3) and/or in the valve element (11), a throttle and stop element (17) is integrated which has a defined throttle cross section (A) for setting the gas mass flow in the refuelling path (7) and a defined height dimension (h) for setting the stroke (H) of the valve element (11).

2. Valve assembly (1) according to Claim 1,
**characterized in that** the throttle and stop element (17) is arranged downstream of the valve element (11) of the check valve (8) in the refuelling direction.

3. Valve assembly (1) according to Claim 1 or 2,
**characterized in that** the defined throttle cross section (A) is formed by at least one bore (18), groove and/or cut-out (19) of the throttle and stop element (17).

4. Valve assembly (1) according to one of the preceding claims,
**characterized in that** the throttle and stop element (17) is inserted, preferably pressed, into the housing (3) of the valve assembly (1) and has an end surface (20) which faces the valve element (11) and serves as a stroke stop (12).

5. Valve assembly (1) according to one of the preceding claims,
**characterized in that** the throttle and stop element (17) is inserted, preferably pressed, at least in sections into the valve element (11) and has an end surface (21) facing away from the valve element (11), which end surface interacts with a housing-side stroke stop (12).

6. Valve assembly (1) according to one of the preceding claims,
**characterized in that** the throttle and stop element (17) is of stepped design.

7. Valve assembly (1) according to one of the preceding claims,
**characterized in that** the throttle and stop element (17) has at least one flattened portion (23) on the outer circumference, for example in the form of a ground portion.

8. Valve assembly (1) according to one of the preceding claims,
**characterized in that** the housing (3) has a connecting section (3.1) for connection to the fuel gas tank (2) and a connection section (3.2) for connection to at least one high-pressure connector line (15).

9. Fuel gas tank (2) having a valve assembly (1) according to one of the preceding claims, wherein the housing (3) of the valve assembly (1) is preferably inserted, in particular screwed, in sections into the fuel gas tank (2), preferably into a bottle neck of the fuel gas tank (2).

10. Fuel gas tank system, comprising at least one fuel gas tank (2) having a valve assembly (1) according to one of Claims 1 to 8.

## Revendications

1. Ensemble de soupape (1) pour un réservoir de gaz combustible (2), comprenant un boîtier (3) dans lequel est formé un chemin de ravitaillement (7) avec une soupape anti-retour (8) intégrée, la soupape anti-retour (8) comprenant un élément de soupape (11) axialement mobile ainsi qu'un ressort de fermeture (9) dont la force de ressort agit sur l'élément de soupape (11) en direction d'un siège de soupape (10),
**caractérisé en ce qu'**est intégré dans la zone de la soupape anti-retour (8), de préférence dans le boîtier (3) et/ou dans l'élément de soupape (11) un élément d'étranglement et de butée (17), qui comporte une section transversale d'étranglement définie (A) pour le réglage du débit massique de gaz dans le chemin de ravitaillement (7) ainsi qu'une hauteur définie (h) pour le réglage de la course (H) de l'élément de soupape (11).

2. Ensemble de soupape (1) selon la revendication 1,
**caractérisé en ce que** l'élément d'étranglement et de butée (17) est disposé en aval de l'élément de soupape (11) de la soupape anti-retour (8) dans la direction de ravitaillement.

3. Ensemble de soupape (1) selon la revendication 1 ou 2,
**caractérisé en ce que** la section transversale d'étranglement définie (A) est formée par au moins un alésage (18), une rainure et/ou un évidement (19) de l'élément d'étranglement et de butée (17).

4. Ensemble de soupape (1) selon l'une des revendications précédentes, **caractérisé en ce que** l'élément d'étranglement et de butée (17) est inséré, de préférence est pressé, dans le boîtier (3) de l'ensemble de soupape (1) et comporte une surface frontale (20) tournée vers l'élément de soupape (11), servant de butée de course (12).

5. Ensemble de soupape (1) selon l'une des revendications précédentes, **caractérisé en ce que** l'élément d'étranglement et de butée (17) est inséré, de préférence est pressé, au moins par sections dans l'élément de soupape (11) et comporte une surface frontale (21) opposée à l'élément de soupape (11), qui coopère avec une butée de course (12) côté boîtier.

6. Ensemble de soupape (1) selon l'une des revendications précédentes, **caractérisé en ce que** l'élément d'étranglement et de butée (17) est réalisé de manière étagée.

7. Ensemble de soupape (1) selon l'une des revendications précédentes, **caractérisé en ce que** l'élément d'étranglement et de butée (17) comporte au moins un aplatissement (23) périphérique extérieur, par exemple sous la forme d'un biseau.

8. Ensemble de soupape (1) selon l'une des revendications précédentes, **caractérisé en ce que** le boitier (3) comporte une section de liaison (3.1) destinée à être reliée au réservoir de gaz combustible (2) ainsi qu'une section de raccordement (3.2) destinée à être reliée à au moins une conduite de raccordement haute pression (15).

9. Réservoir de gaz combustible (2) avec un ensemble de soupape (1) selon l'une des revendications précédentes, le boîtier (3) de l'ensemble de soupape (1) étant inséré, en particulier vissé, par sections dans le réservoir de gaz combustible (2), de préférence dans un goulot de bouteille du réservoir de gaz combustible (2).

10. Système de réservoir de gaz combustible, comprenant au moins un réservoir de gaz combustible (2) avec un ensemble de soupape (1) selon l'une des revendications 1 à 8.
